# EUROPÄISCHE PATENTSCHRIFT

(11) **EP 4 063 626 B1**
(45) Veröffentlichungstag und Bekanntmachung des Hinweises auf die Patenterteilung: **20.08.2025**
(21) Anmeldenummer: 22157861.0
(22) Anmeldetag: 22.02.2022
(51) Int. Cl.: F01N 3/20, F01N 3/28, F01N 13/08

(54) **ABGAS/REAKTIONSMITTEL-MISCHBAUGRUPPE**
EXHAUST GAS / REACTION AGENT MIXING ASSEMBLY
ENSEMBLE DE MÉLANGE GAZ D'ÉCHAPPEMENT / AGENT RÉACTIF

(30) Priorität: 25.03.2021 DE 102021107463
(43) Veröffentlichungstag der Anmeldung: 28.09.2022
(73) Patentinhaber: Purem GmbH, 66539 Neunkirchen (DE)
(72) Erfinder: Mayer, Michael, Bempflingen (DE); Kappes, Konstantin, Stuttgart (DE); Wolf, Tobias, Köngen (DE); Wieland, Arthur, Baltmannsweiler (DE)
(74) Vertreter: Ruttensperger Lachnit Trossin Gomoll

(56) Entgegenhaltungen:
- EP-A1- 2 325 452
- EP-A1- 3 470 641
- DE-A1- 102017 124 541

## Beschreibung

Die vorliegende Erfindung betrifft eine Abgas/Reaktionsmittel-Mischbaugruppe, welche dazu genutzt wird, in einer Abgasanlage einer Brennkraftmaschine insbesondere in einem Fahrzeug eine Durchmischung von Abgas und in das Abgas eingespritztem Reaktionsmittel zu erzeugen.

Bei der Einleitung von Reaktionsmittel, beispielsweise einer Harnstoff/WasserLösung, in das von einer Brennkraftmaschine ausgestoßene Abgas ist es wichtig, dass vor Einleitung des Gemisches aus Abgas und Reaktionsmittel in eine Katalysatoranordnung, beispielsweise SCR-Katalysatoranordnung, eine gute Durchmischung von Abgas und Reaktionsmittel erzeugt wird. Hierzu werden im Allgemeinen Mischelemente in den Abgasstrom stromabwärts einer Reaktionsmittelabgabeeinheit eingesetzt, um im Abgasstrom Verwirbelungen zu erzeugen, welche die Durchmischung von Abgas und in dieses eingespritztem Reaktionsmittel unterstützen. Das Einsetzen derartiger Mischelemente, die beispielsweise mit Verwirbelungen erzeugenden Leitschaufeln oder dergleichen aufgebaut sind, in den Abgasstrom führt einerseits zu einem erhöhten Strömungswiderstand, und bringt andererseits die Gefahr des Entstehens von Ablagerungen des Reaktionsmittels insbesondere in Strömungstoträumen mit sich.

Aus der DE 10 2017 124 541 A1 ist eine Abgas/Reaktionsmittel-Mischbaugruppe für eine Abgasanlage einer Brennkraftmaschine gemäß dem Oberbegriff des Anspruchs 1 bekannt. Bei dieser Mischbaugruppe münden zwei Einmündungskanalabschnitte eines Einmündungskanalbereichs im Bereich einer Mischkanal-Gehäuseumfangswandung eines Mischkanalgehäuses in einen in dem Mischkanalgehäuse gebildete Kanal stromaufwärts eines Bereichs, in welchem Reaktionsmittel eingeleitet wird, und somit stromaufwärts eines in dem Mischkanalgehäuse gebildeten Mischkanals, in welchem das Reaktionsmittel mit über die Einmündungskanalabschnitte eingeleitetem Abgas durchmischt wird, ein.

Es ist die Aufgabe der vorliegenden Erfindung, eine Abgas/Reaktionsmittel-Mischbaugruppe bereitzustellen, welche bei baulich einfacher Ausgestaltung die Gefahr des Entstehens von Ablagerungen mindert.

Erfindungsgemäß wird diese Aufgabe gelöst durch eine Abgas/Reaktionsmittel-Mischbaugruppe für eine Abgasanlage einer Brennkraftmaschine gemäß Anspruch 1. Diese umfasst:
- einen in Richtung einer Mischkanal-Längsachse sich erstreckenden Mischkanal,
- eine Reaktionsmittelabgabeeinheit zum Abgeben von Reaktionsmittel in den Mischkanal,
- einen Abgaszuführkanal stromaufwärts des Mischkanals, wobei der Abgaszuführkanal in einem Einmündungskanalbereich in den Mischkanal einmündet,
wobei der Einmündungskanalbereich zwei in den Mischkanal einmündende Einmündungskanalabschnitte aufweist.

Durch das Einleiten von getrennt bzw. parallel geführten Abgasströmen in den Mischkanal über mindestens zwei Einmündungskanalabschnitte wird beim Zusammenführen der diese Einmündungskanalabschnitte durchströmenden Anteile des von einer Brennkraftmaschine ausgestoßenen Abgases im Mischkanal eine Verwirbelung erzeugt, ohne dass dazu zusätzliche in den Mischkanal eingesetzte Mischelemente erforderlich sind. Das Entstehen von für das Entstehen von Ablagerungen anfälligen Strömungstoträumen im Mischkanal kann daher vermieden werden.

Um beim Zusammenführen der über verschiedene Einmündungskanalabschnitte zugeführten Abgasströmungen möglichst effizient eine Verwirbelung im Mischkanal zu erzeugen, ist der Mischkanal in einem Mischkanalgehäuse mit einem Mischkanal-Gehäuseboden und einer Mischkanal-Gehäuseumfangswandung gebildet, und die zwei Einmündungskanalabschnitte sind im Bereich der Mischkanal-Gehäuseumfangswandung, optional auch im Bereich des Mischkanal-Gehäusebodens, zu dem Mischkanal offen. Insbesondere ist dabei vorgesehen, dass die zwei Einmündungskanalabschnitte an bezüglich der Mischkanal-Längsachse einander im Wesentlichen gegenüberliegenden Umfangsbereichen der Mischkanal-Gehäuseumfangswandung zu dem Mischkanal offen sind. Auch eine derartige Ausgestaltung, bei welcher die zwei Einmündungskanalabschnitte im gleichen axialen Bereich bezüglich der Mischkanal-Längsachse zu dem Mischkanal offen sind, unterstützt das Entstehen einer starken Verwirbelung im Mischkanal.

Um die gesamte Länge des Mischkanals effizient für die Vermischung von Abgas und Reaktionsmittel nutzen zu können, kann die Reaktionsmittelabgabeeinheit an dem Mischkanal-Gehäuseboden vorgesehen sein oder/und kann eine Reaktionsmittel-Hauptabgaberichtung der Reaktionsmittelabgabeeinheit im Wesentlichen in Richtung der Mischkanal-Längsachse orientiert sein.

Eine intensive Verwirbelung im Mischkanal kann weiter dadurch unterstützt werden, dass bei wenigstens einem, vorzugsweise jedem Einmündungskanalabschnitt eine Abgas-Hauptausströmrichtung von aus dem Einmündungskanalabschnitt in den Mischkanal ausströmendem Abgas eine bezüglich der Mischkanal-Längsachse im Wesentlichen tangentiale Strömungsrichtungskomponente aufweist. Bei den zwei Einmündungskanalabschnitten liegt eine jeweilige Abgas-Hauptausströmrichtung von aus den Einmündungskanalabschnitten in den Mischkanal ausströmendem Abgas im Wesentlichen in einer zur Mischkanal-Längsachse orthogonalen Ebene. Es ist in diesem Zusammenhang darauf hinzuweisen, dass eine derartige Hauptausströmrichtung beispielsweise der Hautpströmungsrichtung im Bereich eines mittleren Strömungsfadens eines jeweiligen Einmündungskanalabschnitts entsprechen kann.

Eine Abgas-Hauptzuströmrichtung im Abgaszuführkanal kann im Wesentlichen orthogonal zur Mischkanal-Längsachse sein. Es wird somit eine im Wesentlichen abgewinkelte Struktur erreicht, welche das Eingliedern in andere Systembereiche eines Fahrzeugs unterstützen kann.

Bei einer alternativen Ausgestaltung kann eine Abgas-Hauptzuströmrichtung im Abgaszuführkanal im Wesentlichen parallel zur Mischkanal-Längsachse sein. Es wird somit eine schlanke, in Richtung der Mischkanal-Längsachse langgestreckte Struktur erhalten.

Der Abgaszuführkanal kann im Wesentlichen in einem Abgaszuführkanalgehäuse mit einem Abgaszuführkanal-Gehäuseboden und einer Abgaszuführkanal-Gehäuseumfangswandung und einer Mehrzahl von von dem Abgaszuführkanal-Gehäuseboden oder/und der Abgaszuführkanal-Gehäuseumfangswandung ausgehenden Einmündungsleitungsbereichen gebildet sein, wobei in jedem Einmündungsleitungsbereich ein Einmündungskanalabschnitt gebildet ist.

Da bei der erfindungsgemäß aufgebauten Abgas/Reaktionsmittel-Mischbaugruppe die effiziente Durchmischung von Abgas und Reaktionsmittel durch die Erzeugung einer Verwirbelung im Abgas vermittels der Strömungsführung erreicht wird, kann auf das Anordnen eines oder mehrerer Mischelemente im Mischkanal verzichtet werden.

Die Erfindung betrifft ferner eine Abgasanlage für eine Brennkraftmaschine, umfassend eine erfindungsgemäß aufgebaute Abgas/Reaktionsmittel-Mischbaugruppe.

Zur Umsetzung des Reaktionsmittels in einer katalytischen Reaktion kann stromabwärts des Mischkanals eine SCR-Katalysatoranordnung vorgesehen sein.

Zur weiteren Minderung des Schadstoffanteils im Abgas kann stromaufwärts des Abgaszuführkanals oder/und im Abgaszuführkanal wenigstens eine Abgasbehandlungseinheit vorgesehen sein. Dabei kann die wenigstens eine Abgasbehandlungseinheit eine Katalysatoranordnung oder/und eine Partikelfilteranordnung umfassen.

Die vorliegende Erfindung wird nachfolgend mit Bezug auf die Bilder beiliegenden Figuren detailliert beschrieben. Es zeigt:
- Fig. 1: eine perspektivische Ansicht einer Abgas/Reaktionsmittel-Mischbaugruppe;
- Fig. 2: eine andere perspektivische Darstellung der Abgas/Reaktionsmittel-Mischbaugruppe der Fig. 1;
- Fig. 3: eine Ansicht der Abgas/Reaktionsmittel-Mischbaugruppe der Fig. 1, betrachtet in Richtung einer Mischkanal-Längsachse;
- Fig. 4: eine der Fig. 1 entsprechende Darstellung mit teilweise offenem Abgaszuführkanalgehäuse bzw. Mischkanalgehäuse;
- Fig. 5: eine perspektivische Ansicht einer anderen Ausgestaltungsart einer Abgas/Reaktionsmittel-Mischbaugruppe;
- Fig. 6: eine andere perspektivische Darstellung der Abgas/Reaktionsmittel-Mischbaugruppe der Fig. 5;
- Fig. 7: eine Seitenansicht der mit anderen Systembereichen einer Abgasanlage zusammengefassten Abgas/Reaktionsmittel-Mischbaugruppe der Fig. 5;
- Fig. 8: eine Ansicht der Abgas/Reaktionsmittel-Mischbaugruppe der Fig. 5, betrachtet in Richtung einer Mischkanal-Längsachse.

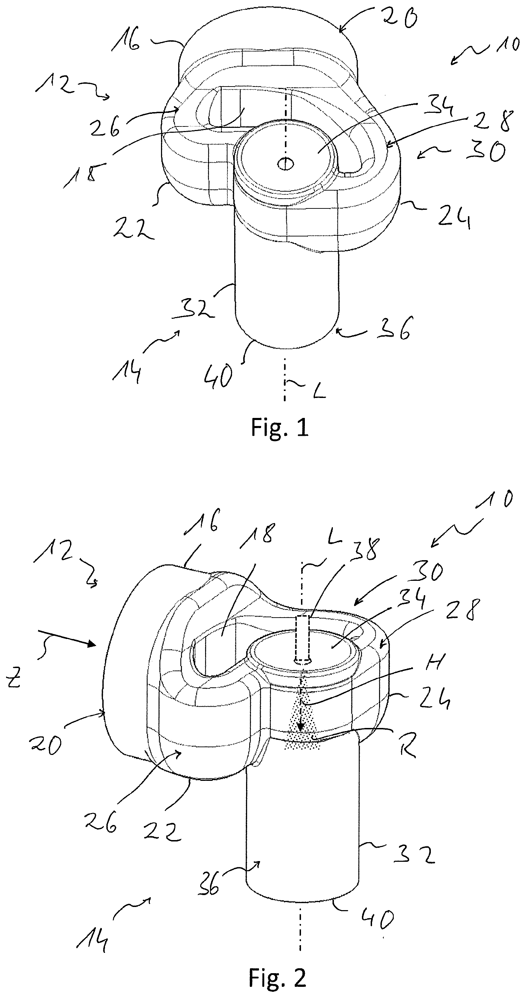

Die Fig. 1 bis 4 zeigen eine erste Ausgestaltungsart einer Abgas/Reaktionsmittel-Mischbaugruppe 10, in welcher das von einer Brennkraftmaschine ausgestoßene Abgas mit in dieses eingespritztem Reaktionsmittel R durchmischt wird.

Die in den Fig. 1 bis 4 dargestellte Abgas/Reaktionsmittel-Mischbaugruppe 10 umfasst ein allgemein mit 12 bezeichnetes Abgaszuführkanalgehäuse und ein daran anschließendes, allgemein mit 14 bezeichnetes Mischkanalgehäuse. Das Abgaszuführkanalgehäuse 12 umfasst eine beispielsweise im Wesentlichen zylindrisch ausgestaltete Abgaszuführkanal-Gehäuseumfangswandung 16 und einen an die Abgaszuführkanal-Gehäuseumfangswandung 16 anschließenden Abgaszuführkanal-Gehäuseboden 18. In einem in dem Abgaszuführkanalgehäuse 12 gebildeten und allgemein mit 20 bezeichneten Abgaszuführkanal strömt insbesondere in dem von der Abgaszuführkanal-Gehäuseumfangswandung 16 umschlossenen Bereich von einer Brennkraftmaschine ausgestoßenes Abgas in Richtung einer Abgas-Hauptzuströmrichtung Z auf dem Abgaszuführkanal-Gehäuseboden 18 zu.

Vom Abgaszuführkanal-Gehäuseboden 18 gehen zwei Einmündungsleitungsbereiche 22, 24 aus. In jedem der Einmündungsleitungsbereiche 22, 24 ist ein Einmündungskanalabschnitt 26, 28 eines allgemein mit 30 bezeichneten Einmündungskanalbereichs des Abgaszuführkanals 20 gebildet.

Das Mischkanalgehäuse 14 umfasst eine beispielsweise im Wesentlichen zylindrisch ausgebildete und in Richtung einer Mischkanal-Längsachse L sich erstreckende Mischkanal-Gehäuseumfangswandung 32 und in einem axialen Endbereich an diese anschließend einen Mischkanal-Gehäuseboden 34. Im Mischkanalgehäuse 14 ist ein sich im Wesentlichen geradlinig erstreckender Mischkanal 36 gebildet.

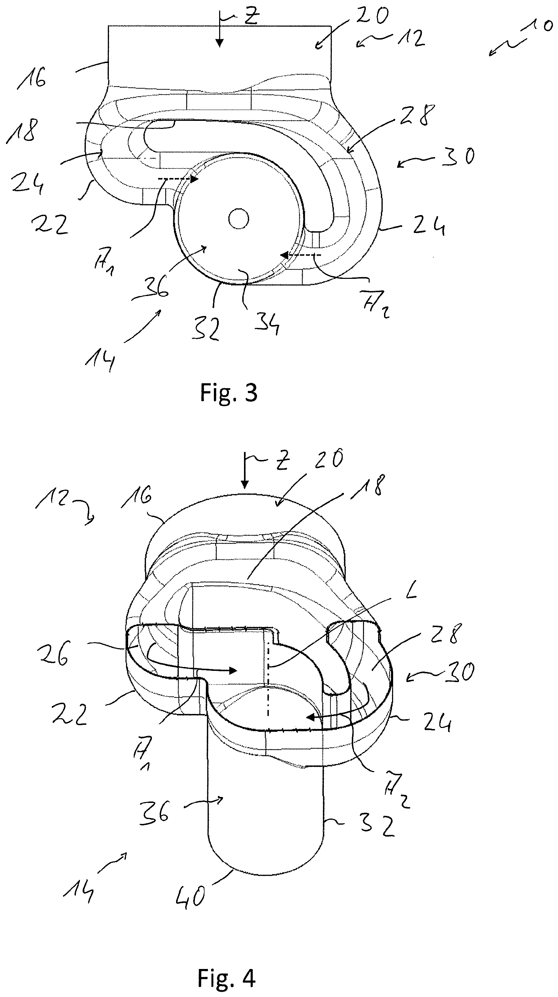

Die beiden Einmündungsleitungsbereiche 22, 24 des Abgaszuführkanalgehäuses 12 schließen an das Mischkanalgehäuse 14 im Bereich der Mischkanal-Gehäuseumfangswandung 32, beispielsweise unmittelbar anschließend an den Mischkanal-Gehäuseboden 34 an. Somit mündet jeder der beiden in den Einmündungsleitungsbereichen 22, 24 bereitgestellten Einmündungskanalabschnitte 26, 28 im Wesentlichen im Bereich der Mischkanal-Gehäuseumfangswandung 32 in den von dieser umgrenzten Mischkanal 36 ein. Der Fig. 3 ist deutlich zu entnehmen, dass die beiden Einmündungsleitungsbereiche 22, 24 derart verlaufen bzw. an die Mischkanal-Gehäuseumfangswandung 32 anschließen, dass diese quer zur Mischkanal-Längsachse L zueinander versetzt sind. Dies führt dazu, dass aus den beiden Einmündungskanalabschnitten 26, 28 austretende Abgasströme jeweils eine Abgas-Hauptausströmrichtung A₁ bzw. A₂ aufweisen, die gleichermaßen quer zur Mischkanal-Längsachse L versetzt sind bzw. bezüglich dieser im Wesentlichen tangential verlaufen bzw. einen wesentlichen bezüglich der Mischkanal-Längsachse L tangential orientierten Strömungsrichtungsanteil aufweisen.

Es ist darauf hinzuweisen, dass eine derartige Abgas-Hauptausströmrichtung A₁ bzw. A₂ näherungsweise der Hauptströmungsrichtung entsprechen kann bzw. durch eine Hauptausströmrichtung definiert sein kann, welche ein einen jeweiligen Einmündungskanalabschnitt 26 bzw. 28 durchströmender Abgasstrom im Bereich des mittleren Strömungsfadens eines jeweiligen Einmündungskanalabschnitts 26 bzw. 28 aufweist. Dies bedeutet, dass eine derartige Abgas-Hauptausströmrichtung A₁ bzw. A₂ im Wesentlichen auch dem Verlauf eines jeweiligen mittleren Strömungsfadens im Bereich der Einmündung eines jeweiligen Einmündungskanalabschnitts 26, 28 in den Mischkanal 36 entsprechen kann. Da in axialer Richtung der Mischkanal-Längsachse L die Einmündungskanalabschnitte 26, 28 im Wesentlichen im gleichen Bereich an die Mischkanal-Gehäuseumfangswandung 32 anschließen, liegen die beiden Abgas-Hauptausströmrichtungen A₁, A₂ bzw. die diese mit ihrem Verlauf beispielsweise vorgebenden mittleren Strömungsfäden auch in einer beispielsweise durch die Zeichenebene der Fig. 3 definierten, zur Mischkanal-Längsachse L im Wesentlichen orthogonalen Ebene.

Am Mischkanal-Gehäuseboden 34 ist beispielsweise zentrisch zur Mischkanal-Längsachse L eine allgemein auch als Injektor bezeichnete Reaktionsmittelabgabeeinheit 38 vorgesehen. Diese gibt das Reaktionsmittel R beispielsweise in Form eines Sprühkegels in einer Reaktionsmittel-Hauptabgaberichtung H entlang der Mischkanal-Längsachse L in den Mischkanal 36 ab. Durch die über die beiden Einmündungskanalabschnitte 26, 28 im Bereich der Eingabe des Reaktionsmittels R in den Mischkanal 36 eingeleiteten Abgasströme wird aufgrund des Umstandes, dass diese an bezüglich der Mischkanal-Längsachse L einander im Wesentlichen diametral gegenüberliegenden Bereichen der Mischkanal-Gehäuseumfangswandung 32 zum Mischkanal 36 offen sind und die Abgas-Hauptausströmrichtungen A₁ bzw. A₂ mit ihren tangential orientierten Strömungsrichtungsanteilen quer zur Mischkanal-Längsachse L zueinander versetzt sind, in dem Mischkanal 36 eine Wirbelströmung erzeugt, welche das in dem Mischkanal 36 eingespritzte Reaktionsmittel R erfasst und entsprechend der Richtung der Wirbelströmung entlang der Innenseite der Mischkanal-Gehäuseumfangswandung 32 und in Richtung der Mischkanal-Längsachse L vom Mischkanal-Gehäuseboden 34 weg zu einer Abgabeöffnung 40 des Mischkanals 36 führt.

Aufgrund dieser im Mischkanal 36 erzeugten Verwirbelung wird eine effiziente Vermischung von Abgas und Reaktionsmittel R und somit auch eine effiziente Verdampfung des Reaktionsmittels R erzeugt, wozu insbesondere auch beiträgt, dass aufgrund dieser Wirbelströmung das Reaktionsmittel R im Mischkanal 36 einen deutlich größeren Strömungsweg zurücklegt, als dies dann der Fall wäre, wenn das Abgas und mit diesem das Reaktionsmittel R im Wesentlichen in Richtung der Mischkanal-Längsachse L strömen würde. Somit wird auch die Verweilzeit des Reaktionsmittels R im Mischkanal 36 und somit auch die Zeit, in welcher dieses verdampfen und sich mit dem Abgas mischen kann, vergrößert.

Da mit dem in den Fig. 1 bis 4 dargestellten Aufbau einer Abgas/Reaktionsmittel-Mischbaugruppe eine effiziente Vermischung von Abgas und Reaktionsmittel R allein durch die Strömungsführung des dem Mischkanal 36 zugeführten Abgases erreicht wird, ist es nicht erforderlich, im Mischkanal 36 stromabwärts der Einleitung von Reaktionsmittel R irgendwelche Mischelemente vorzusehen, welche durch Strömungsablenkung Verwirbelungen erzeugen. Die Gefahr, dass durch das Eingliedern derartiger Mischelemente Strömungstoträume entstehen, in welchen bevorzugt Ablagerungen des Reaktionsmittels R entstehen, ist daher bei einem derartigen Aufbau einer Abgas/Reaktionsmittel-Mischbaugruppe 10 vollständig eliminiert. Auch bei Einsatz beispielsweise einer Harnstoff/Wasser-Lösung als derartiges Reaktionsmittel, bei welchem vor allem der Harnstoff stark zum Entstehen von kristallartigen Ablagerungen neigt, ist dies von wesentlichem Vorteil. Auch wird durch den Verzicht auf derartige Mischelemente im Mischkanal 36 ein durch diese eingeführter erhöhter Strömungswiderstand vermieden, was bereits grundsätzlich zu einem verminderten Schadstoffausstoß einer Brennkraftmaschine beiträgt und selbstverständlich auch einen einfach strukturierten Gesamtaufbau unterstützt.

Die Fig. 1 bis 4 lassen erkennen, dass beim Übergang vom Abgaszuführkanal 20 zum Mischkanal 36 eine grundsätzliche Strömungsablenkung von etwa 90° erfolgt, da die Abgas-Hauptzuströmrichtung Z im Abgaszuführkanal 20 näherungsweise orthogonal orientiert ist zu der Mischkanal-Längsachse L. Die Abgas/Reaktionsmittel-Mischbaugruppe 10 weist somit eine im Wesentlichen angewinkelte Struktur auf.

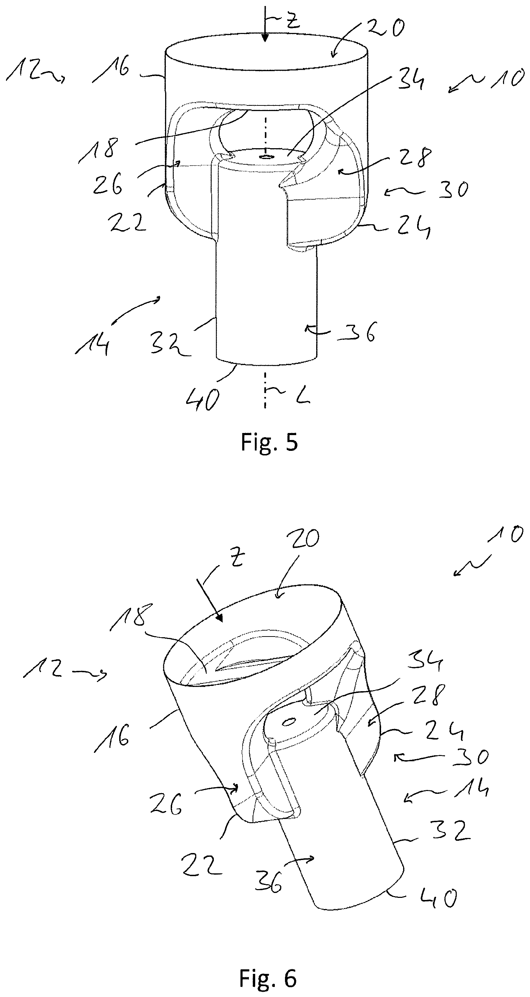

Eine insbesondere hinsichtlich dieses Aspekts alternative Ausgestaltung ist in den Fig. 5 bis 8 dargestellt. Komponenten bzw. Systembereiche, welche vorangehend mit Bezug auf die Fig. 1 bis 4 beschriebenen Komponenten bzw. Systembereichen entsprechen, sind mit den gleichen Bezugszeichen bezeichnet.

Bei dem in den Fig. 5 bis 8 dargestellten Aufbau einer Abgas/Reaktionsmittel-Mischbaugruppe 10 ist das Abgaszuführkanalgehäuse 12 im Wesentlichen in der axialen Verlängerung des Mischkanalgehäuses 14 angeordnet, so dass beispielsweise die Abgaszuführkanal-Gehäuseumfangswandung 16 im Wesentlichen koaxial zur Mischkanal-Umfangswandung 32 positioniert ist. Die im Wesentlichen vom Abgaszuführkanal-Gehäuseboden 18 ausgehenden Einmündungsleitungsbereiche 22, 24 erstrecken sich im Wesentlichen in Richtung der Mischkanal-Längsachse L vom Abgaszuführkanal-Gehäuseboden 18 weg auf das Mischkanalgehäuse 14 zu und schließen in nach radial innen geführten Endbereichen an die Mischkanal-Gehäuseumfangswandung 32 an bezüglich der Mischkanal-Längsachse L einander im Wesentlichen diametral gegenüberliegenden Bereichen an. Auch bei dieser Ausgestaltung strömt das durch die in den Einmündungsleitungsbereichen 22, 24 gebildeten Einmündungskanalabschnitten 26, 28 geführte Abgas in jeweiligen Abgas-Hauptausströmrichtung A₁, A₂ in Richtung zum Mischkanal 36, welche bezüglich der Mischkanal-Längsachse L seitlich versetzt bzw. dazu im Wesentlichen tangential und einander entgegengesetzt gerichtet sind. Auch bei dieser Ausgestaltung werden die durch die beiden Einmündungskanalabschnitte strömenden Abgasströme im Wesentlichen im gleichen axialen Bereich in den Mischkanal 36 eingeleitet, so dass auch dabei effizient eine Wirbelströmung erzeugt wird, welche auch das in der Reaktionsmittel-Hauptabgaberichtung H in den Mischkanal 36 eingeleitete Reaktionsmittel mitnimmt und zu dem vorangehend beschriebenen Durchmischungseffekt führt.

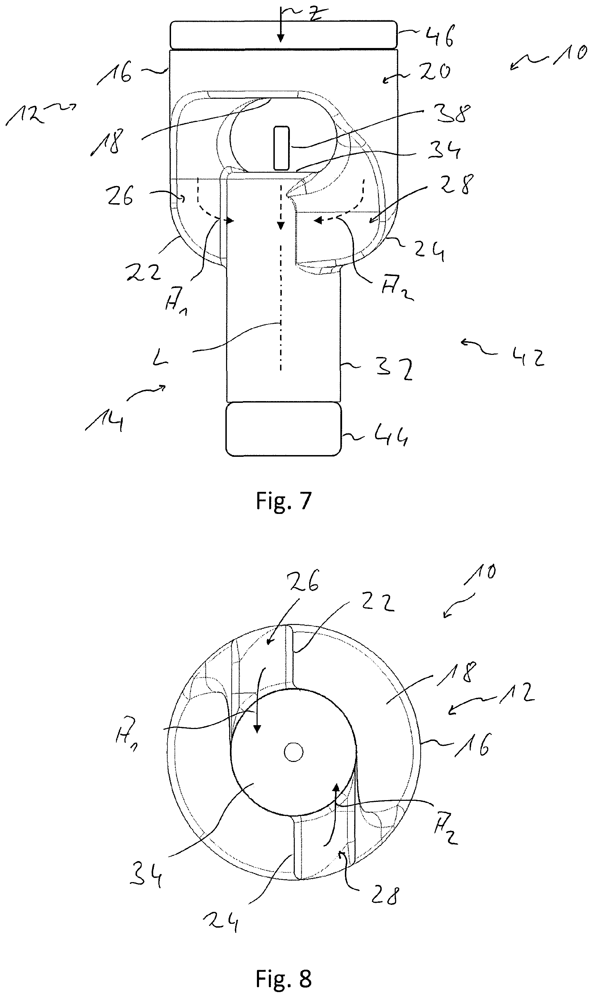

Die Fig. 7 veranschaulicht in prinzipartiger Weise die Integration einer derartigen Abgas/Reaktionsmittel-Mischbaugruppe 10 in eine allgemein mit 42 bezeichnete Abgasanlage. Diese umfasst stromabwärts des Mischkanals 36 bzw. des Mischkanalgehäuses 14 eine SCR-Katalysatoranordnung 44, in welcher unter Umsetzung des Reaktionsmittels der Stickoxidanteil im Abgas gesenkt wird. Die Abgasanlage 42 kann ferner stromaufwärts bezüglich der Abgas/Reaktionsmittel-Mischbaugruppe 10 eine oder mehrere Abgabehandlungseinheiten 46 umfassen. Eine derartige Abgasbehandlungseinheit 46 kann beispielsweise als Katalysatoranordnung, insbesondere Diesel-Oxidationskatalysatoranordnung, ausgebildet sein. Auch die Integration einer als Partikelfilteranordnung ausgebildeten Abgasbehandlungseinheit 46 in eine derartige Abgasanlage 42 stromaufwärts bezüglich der Abgas/Reaktionsmittel-Mischbaugruppe 10 ist möglich. Grundsätzlich kann eine derartige Abgasbehandlungseinheit 46 auch in das Abgaszuführkanalgehäuse 12, insbesondere den von der Abgaszuführkanal-Gehäuseumfangswandung 16 umgebenen Volumenbereich eingesetzt oder eingreifend positioniert sein.

Obgleich die in den Figuren dargestellte Einleitung der Einmündungskanalabschnitte 26, 28 in den Mischkanal 36 im Bereich der Mischkanal-Gehäuseumfangswandung 32 aufgrund des vergleichsweise großen radialen Abstands zur Mischkanal-Längsachse L aufgrund der besonders effizienten Erzeugung eine Wirbelströmung besonders vorteilhaft ist, kann es für eine radial schlanke Bauweise vorteilhaft sein, die die Einmündungskanalabschnitte 26, 28 bereitstellenden Einmündungsleitungsbereiche 22, 24 an das Mischkanalgehäuse 14 alternativ oder zusätzlich im Bereich des Mischkanal-Gehäusebodens 34 anzuschließen. Das oder ein Teil des aus den jeweiligen Einmündungskanalabschnitten 26, 28 austretenden Abgases tritt dann in den Mischkanal 36 im Bereich des Mischkanal-Gehäusebodens 34, also näher an der Mischkanal-Längsachse L in den Mischkanal 36 ein.

## Patentansprüche

1. Abgas/Reaktionsmittel-Mischbaugruppe für eine Abgasanlage einer Brennkraftmaschine, umfassend:
- einen in einem Mischkanalgehäuse (14) mit einem Mischkanal-Gehäuseboden (34) und einer Mischkanal-Gehäuseumfangswandung (32) gebildeten, in Richtung einer Mischkanal-Längsachse (L) sich erstreckenden Mischkanal (36),
- eine Reaktionsmittelabgabeeinheit (38) zum Abgeben von Reaktionsmittel (R) in den Mischkanal (36),
- einen Abgaszuführkanal (20) stromaufwärts des Mischkanals (36), wobei der Abgaszuführkanal (20) in einem Einmündungskanalbereich (30) in den Mischkanal (36) einmündet,
wobei der Einmündungskanalbereich (30) zwei Einmündungskanalabschnitte (26, 28) aufweist, **dadurch gekennzeichnet, dass** die zwei Einmündungskanalabschnitte (26, 28) in den Mischkanal (36) einmünden und an bezüglich der Mischkanal-Längsachse (L) einander im Wesentlichen gegenüberliegenden Umfangsbereichen der Mischkanal-Gehäuseumfangswandung (32) zu dem Mischkanal (36) offen sind, so dass Abgas über die zwei Einmündungskanalabschnitte (26,28) in den Mischkanal (36) im Bereich der Eingabe des Reaktionsmittels (R) in den Mischkanal (36) eingeleitet wird und Abgas-Hauptausströmrichtungen (A₁, A₂) von aus den zwei Einmündungskanalabschnitten (26, 28) in den Mischkanal (36) ausströmendem Abgas in einer zur Mischkanal-Längsachse (L) orthogonalen Ebene liegen.

2. Abgas/Reaktionsmittel-Mischbaugruppe nach Anspruch 1, **dadurch gekennzeichnet, dass** die zwei Einmündungskanalabschnitte (26, 28) im Bereich des Mischkanal-Gehäusebodens (34) zu dem Mischkanal (36) offen sind.

3. Abgas/Reaktionsmittel-Mischbaugruppe nach Anspruch 1 oder 2, **dadurch gekennzeichnet, dass** die zwei Einmündungskanalabschnitte (26, 28) im gleichen axialen Bereich bezüglich der Mischkanal-Längsachse (L) zu dem Mischkanal (36) offen sind.

4. Abgas/Reaktionsmittel-Mischbaugruppe nach einem der Ansprüche 1-3, **dadurch gekennzeichnet, dass** die Reaktionsmittelabgabeeinheit (38) an dem Mischkanal-Gehäuseboden (34) vorgesehen ist, oder/und dass eine Reaktionsmittel-Hauptabgaberichtung (H) der Reaktionsmittelabgabeeinheit (38) im Wesentlichen in Richtung der Mischkanal-Längsachse (L) orientiert ist.

5. Abgas/Reaktionsmittel-Mischbaugruppe nach einem der vorangehenden Ansprüche, **dadurch gekennzeichnet, dass** bei den zwei Einmündungskanalabschnitten (26, 28) eine jeweilige Abgas-Hauptausströmrichtung (A₁, A₂) von aus dem Einmündungskanalabschnitt (26, 28) in den Mischkanal (36) ausströmendem Abgas eine bezüglich der Mischkanal-Längsachse (L) im Wesentlichen tangentiale Strömungsrichtungskomponente aufweist.

6. Abgas/Reaktionsmittel-Mischbaugruppe nach einem der vorangehenden Ansprüche, **dadurch gekennzeichnet, dass** eine Abgas-Hauptzuströmrichtung (Z) im Abgaszuführkanal (10) im Wesentlichen orthogonal zur Mischkanal-Längsachse (L) ist.

7. Abgas/Reaktionsmittel-Mischbaugruppe nach einem der Ansprüche 1-5, **dadurch gekennzeichnet, dass** eine Abgas-Hauptzuströmrichtung (Z) im Abgaszuführkanal (20) im Wesentlichen parallel zur Mischkanal-Längsachse (L) ist.

8. Abgas/Reaktionsmittel-Mischbaugruppe nach einem der vorangehenden Ansprüche, **dadurch gekennzeichnet, dass** der Abgaszuführkanal (20) im Wesentlichen in einem Abgaszuführkanalgehäuse (12) mit einem Abgaszuführkanal-Gehäuseboden (18) und einer Abgaszuführkanal-Gehäuseumfangswandung (16) und einer Mehrzahl von von dem Abgaszuführkanal-Gehäuseboden (18) oder/und der Abgaszuführkanal-Gehäuseumfangswandung (16) ausgehenden Einmündungsleitungsbereichen (22, 24) gebildet ist, wobei in jedem Einmündungsleitungsbereich (22, 24) ein Einmündungskanalabschnitt (26, 28) gebildet ist.

9. Abgas/Reaktionsmittel-Mischbaugruppe nach einem der vorangehenden Ansprüche, **dadurch gekennzeichnet, dass** in dem Mischkanal (36) kein Mischelement angeordnet ist.

10. Abgasanlage für eine Brennkraftmaschine, umfassend eine Abgas/Reaktionsmittel-Mischbaugruppe (10) nach einem der vorangehenden Ansprüche.

11. Abgasanlage nach Anspruch 10, **dadurch gekennzeichnet, dass** stromabwärts des Mischkanals (36) eine SCR-Katalysatoranordnung (44) vorgesehen ist.

12. Abgasanlage nach Anspruch 10 oder 11, **dadurch gekennzeichnet, dass** stromaufwärts des Abgaszuführkanals (20) oder/und im Abgaszuführkanal (20) wenigstens eine Abgasbehandlungseinheit (46) vorgesehen ist.

13. Abgasanlage nach Anspruch 12, **dadurch gekennzeichnet, dass** die wenigstens eine Abgasbehandlungseinheit (46) eine Katalysatoranordnung oder/und eine Partikelfilteranordnung umfasst.

## Claims

1. An exhaust gas/reactant mixing assembly for an exhaust gas system of an internal combustion engine, comprising:
- a mixing channel (36) formed in a mixing channel housing (14) having a mixing channel housing floor (34) and a mixing channel housing peripheral wall (32) and extending in the direction of a mixing channel longitudinal axis (L),
- a reactant delivery unit (38) for delivering reactant (R) into the mixing channel (36),
- an exhaust gas supply channel (20) upstream of the mixing channel (36), wherein the exhaust gas supply channel (20) opens into the mixing channel (36) at an opening channel region (30),
wherein the opening channel region (30) comprises two opening channel portions (26, 28), **characterized in that** the two opening channel portions (26, 28) discharge into the and are open to the mixing channel (36) at peripheral regions of the mixing channel housing peripheral wall (32) which lie substantially opposite one another relative to the mixing channel longitudinal axis (L), so that exhaust gas is introduced into the mixing channel (36) via the two opening channel portions (26, 28) in the region of delivery of the reactant (R) into the mixing channel (36) and so that main exhaust gas outflow directions (A₁, A₂) of exhaust gas flowing out of the two opening channel portions (26, 28) into the mixing channel (36) are in a plane which is orthogonal to the mixing channel longitudinal axis (L).

2. The exhaust gas/reactant mixing assembly as claimed in claim 1, **characterized in that** the two opening channel portions (26, 28) are open to the mixing channel (36) in the region of the mixing channel housing floor (34).

3. The exhaust gas/reactant mixing assembly as claimed in claim 1 or 2, **characterized in that** at least the two opening channel portions (26, 28) are open to the mixing channel (36) in the same axial region relative to the mixing channel longitudinal axis (L).

4. The exhaust gas/reactant mixing assembly as claimed in any of claims 1 - 3, **characterized in that** the reactant delivery unit (38) is provided at the mixing channel housing floor (34), and/or **in that** a main reactant delivery direction (H) of the reactant delivery unit (38) is oriented substantially in the direction of the mixing channel longitudinal axis (L).

5. The exhaust gas/reactant mixing assembly as claimed in any of the preceding claims, **characterized in that** for the two opening channel portions (26, 28), a respective main exhaust gas outflow direction (A₁, A₂) for exhaust gas flowing out of the opening channel portion (26, 28) into the mixing channel (36) has a flow direction component which is substantially tangential relative to the mixing channel longitudinal axis (L).

6. The exhaust gas/reactant mixing assembly as claimed in any of the preceding claims, **characterized in that** a main exhaust gas inflow direction (Z) in the exhaust gas supply channel (20) is substantially orthogonal to the mixing channel longitudinal axis (L).

7. The exhaust gas/reactant mixing assembly as claimed in any of claims 1 - 5, **characterized in that** a main exhaust gas inflow direction (Z) in the exhaust gas supply channel (20) is substantially parallel to the mixing channel longitudinal axis (L).

8. The exhaust gas/reactant mixing assembly as claimed in any of the preceding claims, **characterized in that** the exhaust gas supply channel (20) is formed substantially in an exhaust gas supply channel housing (12) having an exhaust gas supply channel housing floor (18) and an exhaust gas supply channel housing peripheral wall (16) and a plurality of opening line regions (24, 26) starting from the exhaust gas supply channel housing floor (18) and/or from the exhaust gas supply channel housing peripheral wall (16), wherein an opening channel portion (26, 28) is formed in each opening line region (22, 24).

9. The exhaust gas/reactant mixing assembly as claimed in any of the preceding claims, **characterized in that** no mixer element is arranged in the mixing channel (36).

10. An exhaust gas system for an internal combustion engine, comprising an exhaust gas/reactant mixing assembly (10) as claimed in any of the preceding claims.

11. The exhaust gas system as claimed in claim 10, **characterized in that** an SCR catalyst arrangement (44) is provided downstream of the mixing channel (36).

12. The exhaust gas system as claimed in claim 10 or 11, **characterized in that** at least one exhaust gas treatment unit (46) is arranged upstream of the exhaust gas supply channel (20) and/or in the exhaust gas supply channel (20).

13. The exhaust gas system as claimed in claim 12, **characterized in that** the at least one exhaust gas treatment unit (46) comprises a catalyst arrangement and/or a particle filter arrangement.

## Revendications

1. Un ensemble de mélange de gaz d'échappement/réactif pour un système d'échappement d'un moteur à combustion interne, comprenant :
- un canal de mélange (36) formé dans un boîtier de canal de mélange (14) comportant un fond de boîtier de canal de mélange (34) et une paroi périphérique de boîtier de canal de mélange (32) et s'étendant dans la direction d'un axe longitudinal du canal de mélange (L),
- une unité d'alimentation en réactif (38) destinée à alimenter le canal de mélange (36) en réactif (R),
- un canal d'alimentation en gaz d'échappement (20) en amont du canal de mélange (36), dans lequel le canal d'alimentation en gaz d'échappement (20) débouche dans le canal de mélange (36) au niveau d'une zone d'ouverture de canal (30),
dans lequel la zone d'ouverture de canal (30) comprend deux parties de canal d'ouverture (26, 28), **caractérisé en ce que** les deux parties de canal d'ouverture (26, 28) débouchent dans le canal de mélange (36) et sont ouvertes vers celui-ci au niveau de régions périphériques de la paroi périphérique de boîtier de canal de mélange (32) qui sont situées sensiblement en vis-à-vis l'une de l'autre par rapport à l'axe longitudinal du canal de mélange (L), de sorte que les gaz d'échappement sont introduits dans le canal de mélange (36) via les deux parties de canal d'ouverture (26, 28) dans la région d'alimentation du réactif (R) dans le canal de mélange (36) et de sorte que les directions principales d'écoulement des gaz d'échappement (A₁, A₂) s'écoulant hors des deux parties de canal d'ouverture (26, 28) dans le canal de mélange (36) se trouvent dans un plan orthogonal à l'axe longitudinal du canal de mélange (L).

2. L'ensemble de mélange de gaz d'échappement/réactif selon la revendication 1, **caractérisé en ce que** les deux parties de canal d'ouverture (26, 28) sont ouvertes vers le canal de mélange (36) dans la zone du fond de boîtier de canal de mélange (34).

3. L'ensemble de mélange de gaz d'échappement/réactif selon la revendication 1 ou 2, **caractérisé en ce qu'**au moins les deux parties de canal d'ouverture (26, 28) sont ouvertes vers le canal de mélange (36) dans la même région axiale par rapport à l'axe longitudinal du canal de mélange (L).

4. L'ensemble de mélange de gaz d'échappement/réactif selon l'une quelconque des revendications 1 à 3,
**caractérisé en ce que** l'unité d'alimentation en réactif (38) est prévue au niveau du fond (34) du boîtier du canal de mélange, et/ou **en ce qu'**une direction principale d'alimentation en réactif (H) de l'unité d'alimentation en réactif (38) est orientée sensiblement dans la direction de l'axe longitudinal du canal de mélange (L).

5. L'ensemble de mélange de gaz d'échappement/réactif selon l'une quelconque des revendications précédentes,
**caractérisé en ce que**, pour les deux parties de canal d'ouverture (26, 28), une direction principale d'écoulement des gaz d'échappement (A₁, A₂) respective pour les gaz d'échappement s'écoulant hors de la partie de canal d'ouverture (26, 28) dans le canal de mélange (36) a une composante de direction d'écoulement qui est sensiblement tangentielle par rapport à l'axe longitudinal du canal de mélange (L).

6. L'ensemble de mélange de gaz d'échappement/réactif selon l'une quelconque des revendications précédentes,
**caractérisé en ce qu'**une direction principale d'entrée des gaz d'échappement (Z) dans le canal d'alimentation en gaz d'échappement (20) est sensiblement orthogonale à l'axe longitudinal du canal de mélange (L).

7. L'ensemble de mélange de gaz d'échappement/réactif selon l'une quelconque des revendications 1 à 5,
**caractérisé en ce qu'**une direction principale d'entrée des gaz d'échappement (Z) dans le canal d'alimentation en gaz d'échappement (20) est sensiblement parallèle à l'axe longitudinal du canal de mélange (L).

8. L'ensemble de mélange de gaz d'échappement/réactif selon l'une quelconque des revendications précédentes,
**caractérisé en ce que** le canal d'alimentation en gaz d'échappement (20) est formé sensiblement dans un boîtier de canal d'alimentation en gaz d'échappement (12) comportant un fond de boîtier de canal d'alimentation en gaz d'échappement (18) et une paroi périphérique de boîtier de canal d'alimentation en gaz d'échappement (16) et une pluralité de régions de ligne d'ouverture (24, 26) partant du fond de boîtier de canal d'alimentation en gaz d'échappement (18) ou de la paroi périphérique de boîtier de canal d'alimentation en gaz d'échappement (16), dans lequel une partie de canal d'ouverture (26, 28) est formée dans chaque zone de ligne d'ouverture (22, 24).

9. L'ensemble de mélange de gaz d'échappement/réactif selon l'une quelconque des revendications précédentes,
**caractérisé en ce qu'**aucun élément mélangeur n'est disposé dans le canal de mélange (36).

10. Un système d'échappement pour un moteur à combustion interne, comprenant un ensemble de mélange de gaz d'échappement/réactif (10) selon l'une quelconque des revendications précédentes.

11. Le système d'échappement selon la revendication 10,
**caractérisé en ce qu'**un dispositif catalytique SCR (44) est prévu en aval du canal de mélange (36).

12. Le système d'échappement selon la revendication 10 ou 11,
**caractérisé en ce qu'**au moins une unité de traitement des gaz d'échappement (46) est disposée en amont du canal d'alimentation en gaz d'échappement (20) et/ou dans le canal d'alimentation en gaz d'échappement (20).

13. Le système d'échappement selon la revendication 12,
**caractérisé en ce que** ladite au moins une unité de traitement des gaz d'échappement (46) comprend un dispositif catalytique et/ou un dispositif de filtrage des particules.
